# FASCICULE DE BREVET EUROPEEN

(11) **EP 1 430 762 B1**
(45) Date de publication et mention de la délivrance du brevet: **23.11.2005**
(21) Numéro de dépôt: 03360142.8
(22) Date de dépôt: 08.12.2003
(51) Int. Cl.: A01C 7/12, A01C 7/10

(54) **Mécanisme de dosage pour semoir**
Dosiervorrichtung für eine Sämaschine
Metering device for a seed drill

(30) Priorité: 16.12.2002 FR 0216045
(43) Date de publication de la demande: 23.06.2004
(73) Titulaire: Kuhn-Nodet S.A., 77876 Montereau (FR)
(72) Inventeur: Viriat, Laurent, 77940 Diant (FR); Piasentin, Christian, 77710 Lorrez le Bocage (FR)
(74) Mandataire: Andres, Jean-Claude

(56) Documents cités:
- FR-A- 2 070 444
- FR-A- 2 660 830
- US-A- 4 500 017

## Description

La présente invention se rapporte au domaine technique général du machinisme agricole et en particulier aux machines de distribution. Elle concerne plus particulièrement un mécanisme de dosage destiné à équiper un semoir, ledit semoir comportant entre autres une trémie d'alimentation en graines et un dispositif d'implantation de graines dans le sol, ledit mécanisme de dosage qui est disposé entre ladite trémie d'alimentation en graines et ledit dispositif d'implantation de graines dans le sol, comporte :
- au moins un dispositif de dosage permettant de doser le débit de graines à la sortie de la trémie, et
- au moins une porte inférieure disposée sous le dispositif de dosage correspondant, chaque porte inférieure étant pivotante et pouvant se rapprocher ou s'éloigner dudit dispositif de dosage correspondant, la largeur de ladite porte inférieure étant sensiblement égale à la largeur dudit dispositif de dosage correspondant.

Un tel mécanisme de dosage est connu de l'homme du métier par l'intermédiaire du document **FR 2 394 237**. Ce mécanisme de dosage connu équipe un semoir mécanique avec une trémie à graines comportant dans sa partie inférieure plusieurs orifices d'évacuation de graines. Le mécanisme de dosage permet de transférer les graines de la trémie au dispositif d'implantation de graines dans le sol. A cet effet, le mécanisme de dosage comporte des dispositifs de dosage disposés en aval de chaque orifice d'évacuation dont la vitesse de rotation est variable. Lesdits dispositifs de dosage sont montés entre deux parois verticales. Chaque dispositif de dosage comporte encore une porte inférieure destinée à canaliser le flux de graines en sortie dudit dispositif de dosage. La largeur du dispositif de dosage ainsi que de la porte inférieure est quelque peu inférieure à la distance comprise entre les deux parois verticales correspondantes. Ladite porte inférieure disposée en dessous du dispositif de dosage est monté rotative sur l'arbre. En position de travail, l'extrémité libre de ladite porte inférieure s'étend au voisinage du dispositif de dosage correspondant. Ladite porte inférieure est immobilisée sur l'arbre au moyen d'un levier et d'une vis. Un autre mécanisme de dosage selon le préambule de la revendication 1 est aussi décrit dans le document FR 2 660 830.

Lors du fonctionnement de ce semoir, il est courant que certaines graines se bloquent entre le dispositif de dosage et la porte inférieure. Pour éviter un tel blocage, la porte inférieure, qui est montée sur un ressort, peut s'escamoter afin de libérer les graines immobilisées. Ainsi les graines immobilisées peuvent être dégagées sans être détériorées. Lorsque la porte inférieure s'escamote, la distance entre le dispositif de dosage et ladite porte inférieure augmente pour laisser passer les graines immobilisées. Ladite porte inférieure s'étendant sur toute la largeur du dispositif de dosage, s'escamote sur toute sa largeur et laisse ainsi passer plusieurs graines simultanément entraînant un semis irrégulier. Un phénomène similaire se produit lorsqu'un corps de plus grande taille, se trouvant dans la trémie, est entraîné par le dispositif de dosage et est évacué par la porte inférieure.

Des graines peuvent également être immobilisées entre le dispositif de dosage et les parois verticales situées de part et d'autre du dispositif de dosage et être plus ou moins endommagées et ne plus germer lorsqu'elles seront implantées en terre.

Le but de la présente invention vise donc à remédier à ces inconvénients de l'état de la technique. Elle doit notamment proposer un dispositif de dosage permettant une évacuation individuelle des graines habituellement semées par les agriculteurs.

L'objet assigné à la présente invention est atteint à l'aide d'un mécanisme de dosage tel que décrit dans le préambule et qui est caractérisé par le fait que ladite porte inférieure comporte plusieurs lamelles.

Selon une autre caractéristique de l'invention la porte inférieure comporte avantageusement quatre lamelles. Les lamelles de la porte inférieure permettent avantageusement de libérer des graines avec plus de régularité surtout lors de coincement visible de grosses graines. En effet, la distance entre une des lamelles et le dispositif de dosage correspondant augmente ponctuellement pour que la graine puisse être évacuée. On privilégie ainsi le semis régulier graine par graine et le phénomène de semis en poquet est limité.

Chaque dispositif de dosage comporte avantageusement une roue de dosage de type grosses graines et une roue de dosage de type petites graines toutes deux dotées de leur propre porte inférieure. Ce mécanisme de dosage s'adapte donc très rapidement au type de graines à semer.

Une autre caractéristique importante de l'invention consiste en ce que la roue de dosage de type grosses graines est cloisonnée entre deux flasques. Ces derniers sont avantageusement entraînés en rotation avec les dispositifs de dosage favorisant ainsi l'entraînement des graines et évitant l'immobilisation de graines entre le dispositif de dosage et les flasques latéraux.

D'autres caractéristiques de l'invention apparaîtront encore dans les sous-revendications et dans la description suivante d'un exemple de réalisation non limitatif de l'invention représenté sur les dessins annexés sur lesquels :
- la **figure 1** représente un semoir conforme à l'invention ;
- la **figure 2** représente, à plus grande échelle, une partie du mécanisme de dosage conforme à l'invention ;
- la **figure 3** représente une coupe suivant le plan III-III de la figure 2 ;
- la **figure 4** représente, à plus grande échelle, un dispositif de dosage comportant une roue de dosage de type grosses graines et une roue de dosage de type petites graines ;
- la **figure 5** représente une porte inférieure selon l'invention ;
- la **figure 6** représente un boîtier de distribution conforme à l'invention.

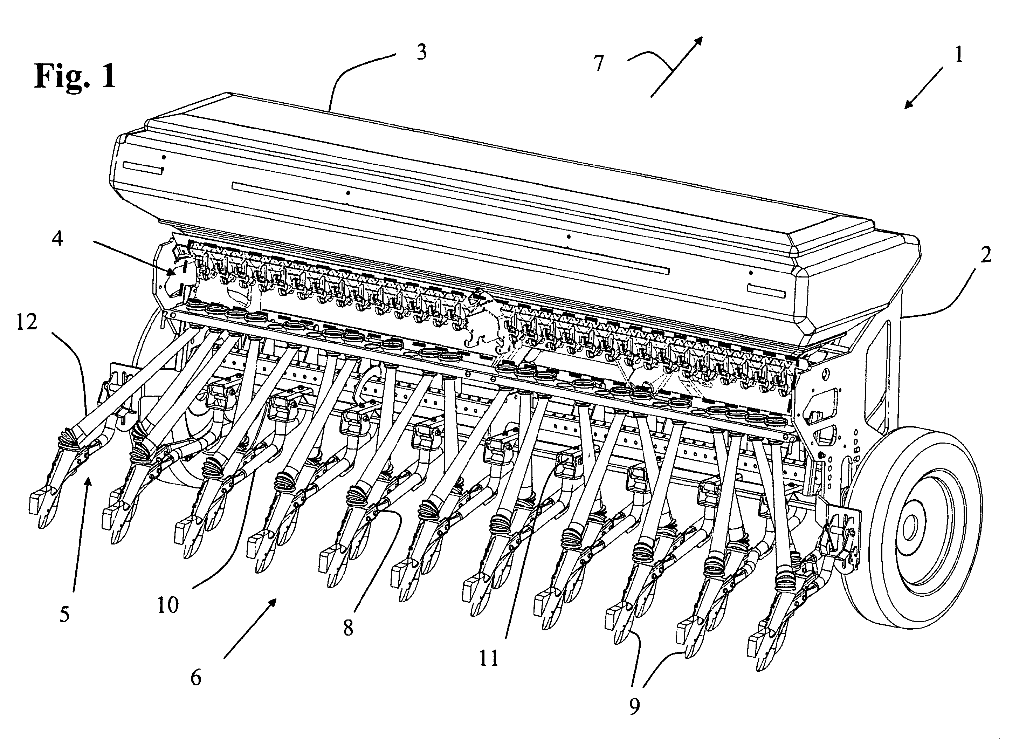

Le semoir (1) représenté sur la figure 1 comporte dans les grandes lignes et d'une manière connue de l'homme du métier un châssis (2), une trémie d'alimentation en graines (3), un mécanisme de dosage (4), un dispositif d'acheminement (5) et un dispositif d'implantation de graines dans le sol (6).

Lors du travail, ledit semoir (1) est amené à être déplacé, suivant une direction d'avance (7), sur un sol à ensemencer. Les graines, initialement contenues dans ladite trémie d'alimentation (3), sont transportées jusqu'au dispositif d'implantation (6) au moyen dudit dispositif d'acheminement (5). Puis lesdites graines sont enfouies dans ledit sol au moyen dudit dispositif d'implantation (6). Le mécanisme de dosage (4), quant à lui, permet de régler précisément la quantité de graines déposée par hectare. Pour sa part, ledit châssis (2) permet de lier, directement ou indirectement, ledit semoir (1) à un véhicule tracteur (non représenté).

Dans la suite de la description, les notions "avant" et "arrière", "devant" et "derrière" sont définies par rapport au sens d'avance (7) et les notions "droite" et "gauche" sont définies en regardant ledit semoir (1) de l'arrière dans ledit sens d'avance (7).

Le semoir (1) de l'invention est du type "semoir en ligne". A cet effet, ledit dispositif d'implantation (6) comprend plusieurs éléments d'implantation (8) disposés à intervalle sensiblement régulier sur toute la largeur dudit semoir (1). Ces éléments d'implantation (8) se situent sur deux rangs et sont espacés de telle sorte qu'il y a des intervalles assez réguliers entre les lignes dans lesquelles sont déposées les graines. Ledit dispositif d'implantation (6) est lié audit châssis (2). D'une manière connue de l'homme du métier, chaque élément d'implantation (8) comporte un soc (9) et un bras de liaison (10). Chaque bras de liaison (10) est lié, à une extrémité, audit châssis (2) au moyen d'une articulation respective (11), et à une autre extrémité audit soc correspondant (9). Lesdits bras de liaison (10) s'étendent vers l'arrière dudit semoir (1), compte tenu de ladite direction d'avance (7) et lesdits socs (9) sont disposés sur plusieurs rangées sensiblement perpendiculaires à ladite direction d'avance (7). Le semoir (1) de invention comporte avantageusement deux rangées d'éléments d'implantation (8). Les bras de liaison (10) du dispositif d'implantation (6) sont identiques en forme et en longueur, indépendamment de leurs positions dans la première ou la deuxième rangée. Lesdites articulations (11), d'axe respectif sensiblement perpendiculaire à ladite direction d'avance (7), permettent avantageusement auxdits socs (9) de suivre les dénivellations du sol. Lors du travail, chaque soc (9) creuse un sillon dans le sol et il y dépose les graines. Ledit dispositif d'implantation (6) est aussi équipé d'une herse de recouvrement (non représentée), disposée derrière lesdits socs (9), qui referme lesdits sillons après la dépose des graines.

Ledit semoir en ligne (1) est mécanique. Ainsi le transport des graines de la trémie d'alimentation (3) jusqu'auxdits socs (9) s'effectue par gravité. A cet effet, ledit dispositif d'acheminement (5) comporte plusieurs conduites (12) débouchant chacune sur un soc respectif (9). Afin de permettre auxdits socs (9) de suivre les dénivellations du sol, lesdites conduites (12) sont avantageusement télescopiques et articulées.

La trémie d'alimentation en graines (3) comporte dans sa partie inférieure des orifices d'évacuation (non représentés) débouchant sur ledit mécanisme de dosage (4), lequel est relié auxdits socs (9) au moyen desdites conduites (12). On voit que ladite trémie d'alimentation en graines (3) est liée audit châssis (2) et qu'elle s'étend transversalement à ladite direction d'avance (7). On notera que pour simplifier la représentation du dessin de la figure 1, le mécanisme de dosage (4) n'est pas représenté en détail mais il est simplement situé au niveau du rectangle en trait discontinu. Le mécanisme de dosage (4) trouve avantageusement sa place entre ladite trémie d'alimentation en graines (3) et le dispositif d'implantation (6), il s'étend sur toute la largeur du semoir (1).

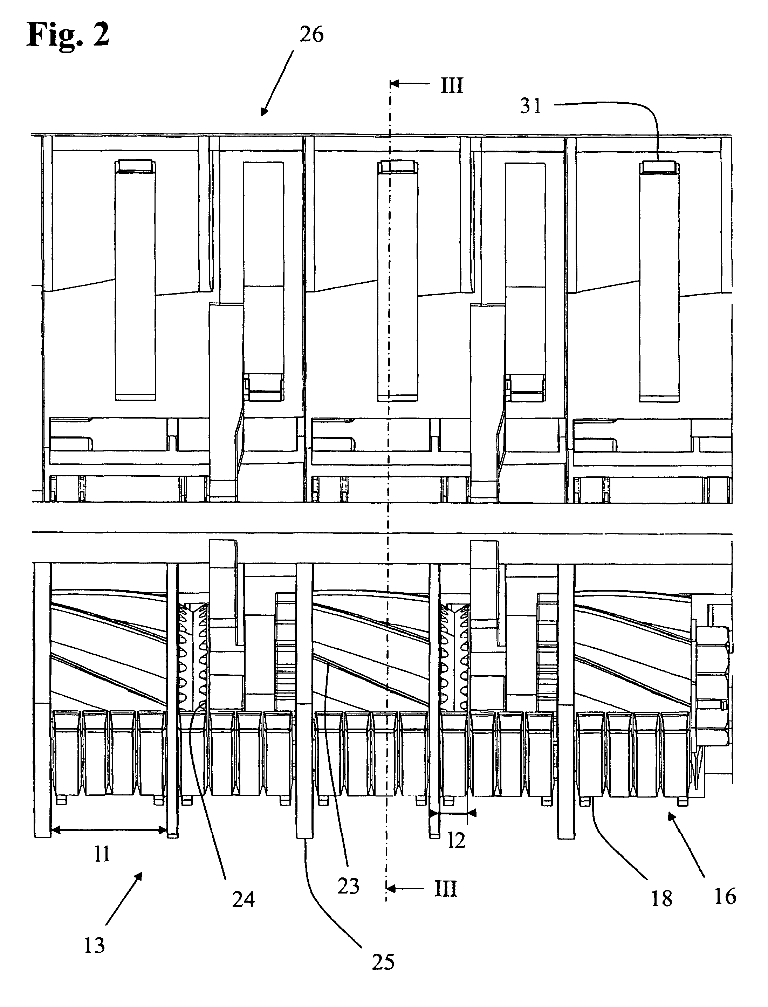

La figure 2 représente plus précisément une partie du mécanisme de dosage (4). On peut noter que ledit mécanisme de dosage (4) est constitué de plusieurs dispositifs de dosage (13) qui sont montés sur un arbre de distribution (14). Cet arbre de distribution (14) s'étend sensiblement sur toute la largeur du semoir (1). Ce semoir en ligne (1) est équipé d'un dispositif de dosage (13) pour chaque ligne de semis gérant le débit de graines en sortie de trémie (3). Chaque dispositif de dosage (13) est relié à une conduite (12) dudit dispositif d'acheminement (5).

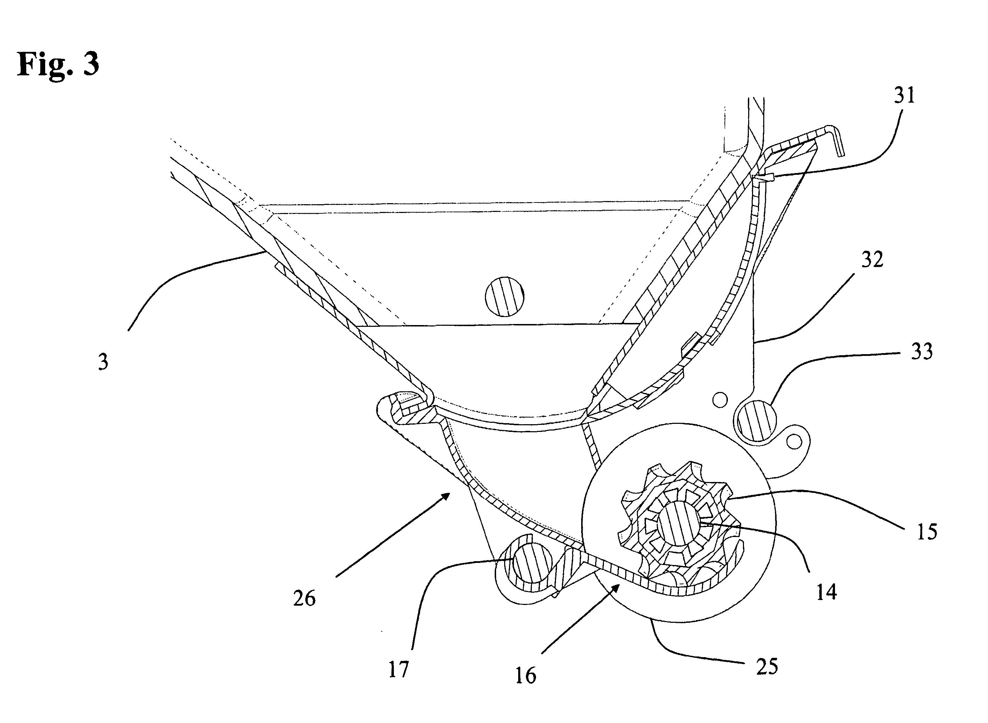

La figure 3 représente une vue partielle de la trémie d'alimentation en graines (3) destinée à être montée sur des machines de distribution et en particulier sur des semoirs comme défini ci-avant. Le mécanisme de dosage (4) est disposé selon un plan sensiblement horizontal sous la trémie (3) afin d'être alimenté en graines. L'arbre de distribution (14) est, quant à lui, disposé approximativement sous la trémie d'alimentation en graines (3). Ledit arbre de distribution (14) est sensiblement horizontal et perpendiculaire à la direction d'avance (7).

D'une manière connue de l'homme de l'art, le mécanisme de dosage (4) ou plus précisément l'arbre de distribution (14) est entraîné en rotation autour de son axe au moyen d'un dispositif d'entraînement (non représenté). Ce dispositif d'entraînement comporte une roue d'entraînement (non représentée) qui lors du travail roule sur le sol et son mouvement de rotation est transmis audit mécanisme de dosage (4) au moyen d'organes de transmission (non représentés). Les organes de transmissions respectifs sont liés audit mécanisme de dosage (4) au moyen d'une boîte de vitesses (non représentée) ou d'un variateur (non représenté) et d'une roue libre (non représentée). En entraînant plus ou moins vite ledit mécanisme de dosage (4), pour une même vitesse d'avance dudit semoir (1), ladite boîte de vitesses ou ledit variateur permettent une première approche dans le réglage de la quantité de semence déposée.

Selon l'exemple de réalisation représenté sur la figure 3, chaque dispositif de dosage (13) est muni de cannelures (15). Le volume, engendré par lesdites cannelures (15) lors de la rotation de l'arbre de distribution (13), détermine la quantité de graines implantée dans le sol. Afin de garantir un dosage homogène, la vitesse de rotation desdits dispositifs de dosage (13) est avantageusement proportionnelle à la vitesse d'avance dudit semoir (1). Les cannelures (15) permettent avantageusement de doser toutes sortes de graines habituellement semées par les agriculteurs.

Chaque dispositif de dosage (13) est encore pourvu d'une porte inférieure (16). Cette porte inférieure (16) est disposée avantageusement au voisinage dudit dispositif de dosage (13) de manière à canaliser les graines en sortie. Ladite porte inférieure (16) est montée de manière pivotante sur un axe (17) disposé sous la trémie d'alimentation en graines (3). Cet axe (17) est disposé parallèlement à l'arbre de distribution (14), en contrebas et légèrement vers l'avant de ce dernier par rapport à la direction d'avance (7). Ladite porte inférieure (16) est immobilisée sur l'axe (17) au moyen d'une vis (non représentée). De part ce montage, lesdites portes inférieures (16) peuvent se rapprocher ou s'éloigner dudit dispositif de dosage correspondant (13) par simple pivotement de l'axe (17). De plus, la largeur de ladite porte inférieure (16) est également adaptée à la largeur dudit dispositif de dosage correspondant (13).

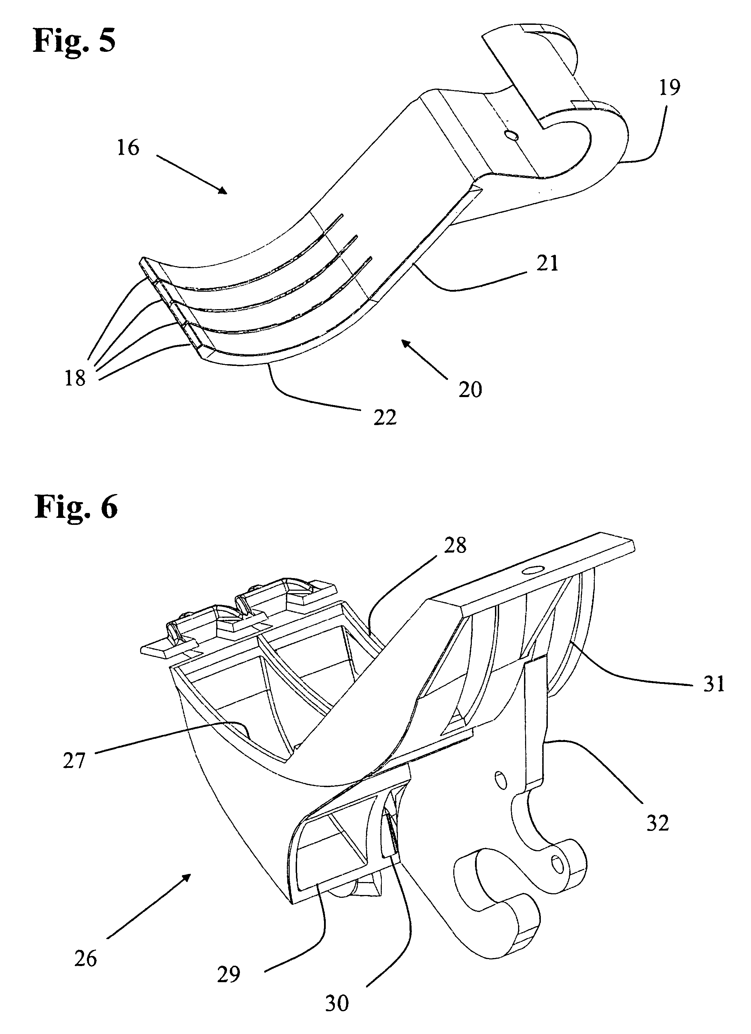

Selon une caractéristique importante de la présente invention, ladite porte inférieure (16) du dispositif de dosage (13) comporte avantageusement des lamelles (18). Ces lamelles (18) ont pour but de permettre une évacuation individuelle des graines pour obtenir un semis régulier. Une telle porte inférieure (16) est représentée sur la figure 5.

Chaque porte inférieure (16) est constituée d'une partie de liaison (19) et d'une partie de travail (20). La partie de liaison (19) est montée sur l'axe (17) et est immobilisée au moyen de ladite vis. Ladite partie de travail (20), quant à elle, est constituée d'une portion sensiblement plane (21) liée à la partie de liaison (19) et d'une portion courbée (22) qui est liée à la portion plane (21). Le rayon de courbure de la partie courbée (22) est sensiblement concentrique au rayon du dispositif de dosage (13). Au repos comme dans des conditions de travail sans immobilisation de graines, la partie courbée (22) est destinée à venir au niveau des cannelures (15) du dispositif de dosage correspondant (13), comme représenté sur la figure 3.

Selon l'exemple de réalisation représenté sur la figure 5, ladite porte inférieure (16) comporte avantageusement quatre lamelles (18). Ces lamelles (18) présentent une largeur sensiblement identique. Les lamelles (18) débutent sur la portion plane (21) de la partie de travail (20) et se terminent au bout de la portion courbée (22). La porte inférieure (16) est réalisée dans une matière plastique et avantageusement élastique. La souplesse de chaque lamelle (18) permet d'augmenter la distance entre la lamelle (18) et le dispositif de dosage correspondant (13) pour permettre l'évacuation de la graine qui est bloquée sans la détériorer. La souplesse des lamelles (18) dépend de leur position sur la partie plane (21). Les lamelles (18) permettent également l'évacuation de corps de grande taille sans entraîner l'évacuation de plusieurs graines. Grâce auxdites lamelles (18), on privilégie un semis régulier et non un semis en poquet. Lorsque la graine ou le corps est évacué, la lamelle (18) revient immédiatement dans sa position initiale au voisinage des cannelures (15).

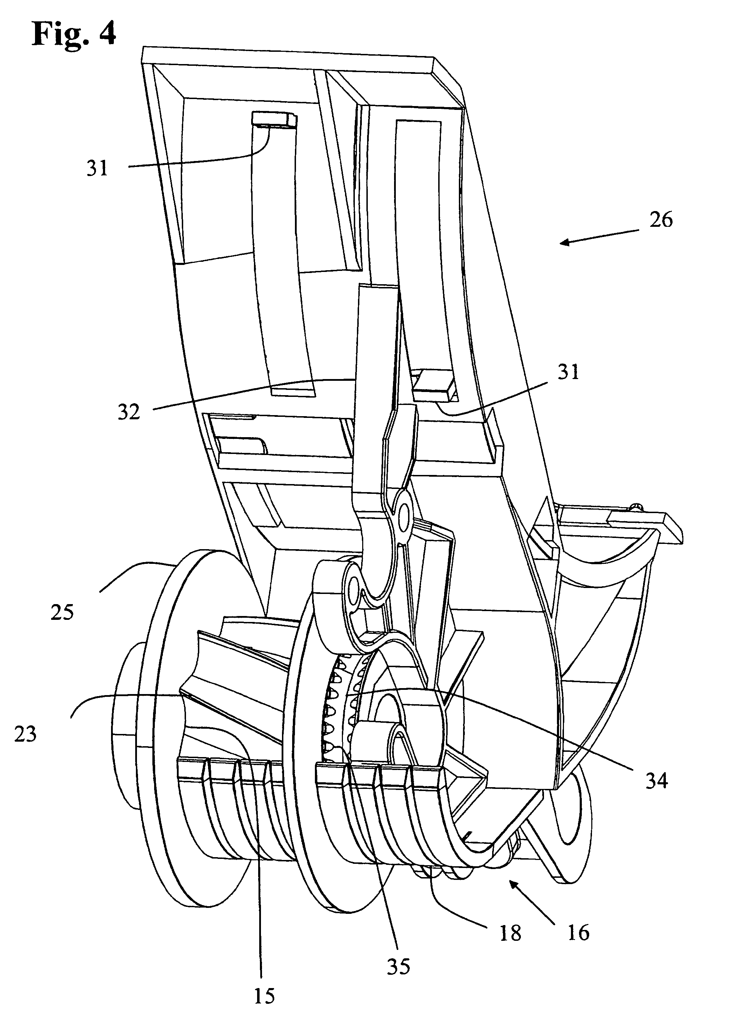

D'une manière préférentielle, le semoir (1) de l'invention permet de semer toutes sortes de graines, elles sont de taille et de forme bien différentes. En effet, les agriculteurs sont amenés à semer des grosses graines allongées telle que de l'orge, de l'avoine ou du blé et des petites graines rondes comme du colza ou de la moutarde. La figure 4 montre ainsi le dispositif de dosage (13) comportant une roue de dosage (23) de type grosses graines et une roue de dosage (24) de type petites graines. Les roues de dosage (23) de type grosses graines sont munies de grosses cannelures hélicoïdales et les roues de dosage (24) de type petites graines sont munies de petites encoches en quinconce. Le semis de variétés telles que le colza s'effectue grâce aux roues de dosage (24) de type petites graines.

La figure 2 représente un exemple de réalisation du mécanisme de dosage (4). Cette figure présente la disposition en alternance des roues de dosage (23) de type grosses graines et des roues de dosage (24) de type petites graines sur l'arbre de distribution (14). On remarque que la roue de dosage (23) de type grosses graines présente d'une part un diamètre extérieur au niveau des cannelures (15) supérieur au diamètre de la roue de dosage (24) de type petites graines et d'autre part une largeur (11) supérieure à la largeur (12) de ladite roue de dosage (24) de type petites graines. Le montage et l'entraînement des roues de dosage (16, 17) sur l'arbre de distribution (14) étant à la portée de l'homme de l'art, ils n'ont donc pas été représentés sur les figures et ne seront pas décrit davantage. Chaque élément d'implantation (8) peut donc être alimenté via sa conduite (12) soit par une roue de dosage (23) de type grosses graines ou soit par une roue de dosage (24) de type petites graines.

Selon une caractéristique importante, les deux types de roues de dosage (23, 24) sont séparées par un flasque (25). Ledit flasque (25) permet avantageusement de distinguer les deux roues de dosage (23, 24). Ladite roue de dosage (23) de type grosses graines est avantageusement cloisonnée entre deux flasques (25). Selon une autre caractéristique importante, lesdits flasques (25) sont entraînés simultanément, en rotation, avec ladite roue de dosage (23) de type grosses graines. Ceci favorise l'écoulement des graines et limite le risque de coincement des graines entre les cannelures (15) et lesdits flasques latéraux (25).

Sur la représentation de la figure 4, le diamètre des flasques (25) est avantageusement supérieur au diamètre des roues de dosage (23) de type grosses graines. La porte inférieure (16) canalisant le flux de graines en sortie de cannelures (15) est disposée entre ces deux flasques latéraux (25). Ladite porte inférieure (16) comporte donc une largeur sensiblement égale à la largeur (11) de la roue de dosage (23) de type grosses graines. Dans la configuration de semis de grosses graines, la portion courbée (22) de la porte inférieure (16) est sensiblement en contact avec les cannelures (15) de la roue de dosage (23) de type grosses graines. On peut noter que l'extrémité libre des lamelles (18) comporte un chanfrein. Ce chanfrein permet d'éviter aux graines de rebondir sur l'extrémité de la lamelle (18) avant de tomber dans la conduite (12). On remarque également qu'une lamelle (18) comporte de part et d'autre un chanfrein permettant, quant à lui, de limiter les surfaces de frottement entre deux lamelles voisines (18). Ainsi, lorsqu'une lamelle (18) s'écarte de la roue de dosage (23) de type grosses graines correspondante, elle n'entraîne pas une lamelle voisine (18).

A la lumière des figures 3 et 4, chaque dispositif de dosage (13) comporte en amont un boîtier de distribution (26) respectif, fixé à la trémie d'alimentation en graines (3). Comme représenté sur la figure 6, chaque boîtier de distribution (26) comporte avantageusement deux entrées de graines (27, 28). Ces entrées de graines (27, 28) correspondent auxdits orifices d'évacuation ménagés dans la partie inférieure de ladite trémie d'alimentation (3). L'entrée de graines (27) est plutôt utilisée pour les grosses graines et les graines allongées tandis que l'entrée de graines (28) est principalement utilisée pour les petites graines rondes. Les entrées de graines (27, 28) comportent une même largeur adaptée aux orifices d'évacuation de la trémie (3). A chaque entrée (27, 28) correspond aussi une sortie de graines (29, 30).

Les sorties de graines (29, 30) alimentent lesdites roues de dosage (23, 24) en graines lors du fonctionnement. La sortie de graines (29) alimente la roue de dosage (23) de type grosses graines et sa largeur est adaptée à la largeur (11) de ladite roue de dosage (23) de type grosses graines. La sortie de graines (30) est avantageusement adaptée au semis de petites graines, elles présentent donc une largeur sensiblement identique à la largeur (12) de ladite roue de dosage (24) de type petites graines qu'il alimente en petites graines.

Les boîtiers de distribution (26) comporte avantageusement au moins une trappe (31), visible sur les figures 2 à 4. Chaque entrée de graines (27, 28) peut être condamnée par une trappe correspondante (31). Ainsi selon le type de graines à implanter dans le sol, on condamne soit une entrée de graines (27 ; 28) soit l'autre (28 ; 27) du boîtier de distribution (26). Ces trappes (31) permettant de bloquer l'alimentation en graines des roues de dosage (23) de type grosses graines ou des roues de dosage (24) de type petites graines. Il est aussi aisé de condamner un dispositif de dosage (13) lorsque l'on ne désire pas implanter de graines dans une ligne de semis afin de réaliser les traitements phytosanitaires ultérieur. De plus, l'utilisateur peut ainsi obtenir différents écartements des lignes de semis qui seront alors idéalement adaptés aux types de graines implantées.

La roue de dosage (24) de type petites graines est disposée, d'après l'exemple de réalisation représenté sur la figure 2 ou 3, à droite de la roue de dosage (23) de type grosses graines équipant une ligne de semis. La roue de dosage (24) de type petites graines est séparée de la roue de dosage (23) de type grosses graines par ledit flasque (25). De l'autre côté de la roue de dosage (24) de type petites graines se trouve une paroi (32). Cette paroi (32) appartient au boîtier de distribution (26) et se trouve à côté de la sortie de petites graines (30). Ladite paroi (32) permet de maintenir ledit boîtier de distribution (26) sous la trémie d'alimentation (3) grâce aux ouvertures destinées à recevoir l'arbre de distribution (14) et un arbre additionnel (33). La présence d'un flasque unilatéral (25) en mouvement pour la roue de dosage (24) de type petites graines favorise l'écoulement des petites graines et évite le coincement et l'écrasement des graines.

Selon une caractéristique importante, les roues de dosage (24) de type petites graines sont aussi équipées d'une porte inférieure (16). Celle-ci est identique à celle d'une roue de dosage (23) de type grosses graines. Néanmoins de part la petite largeur (12) de la roue de dosage (24) de type petites graines une seule lamelle (18) recouvre la totalité de la roue de dosage (24). Avec la roue de dosage (24) de type petites graines, on sème généralement des petites graines de forme ronde qui sont moins sujettes à des accumulations de graines. La largeur d'une lamelle (18) est donc sensiblement égale à la largeur (12) de ladite roue de dosage (24) de type petites graines. Lors du semis de petites graines, la porte inférieure (16) n'est pas directement en contact avec la roue de dosage (24) de type petites graines mais ladite porte inférieure (16) est réglée de manière à être au voisinage de la roue de dosage (24) de type petites graines. La roue de dosage (24) de type petites graines permet également de distribuer de l'engrais sous forme de granulé.

D'une manière préférentielle comme représentée sur la figure 4, la roue de dosage (24) de type petites graines comporte une gorge centrale (35) de forme générale en "V". La pointe du "V" formant la gorge centrale (35) et les branches du "V" formant les flancs de la gorge (35). Les flancs de ladite gorge centrale (35) comportent des encoches (36) à intervalle régulier favorisant la régularité du flux de graines. Grâce à cette gorge centrale (35), les petites graines sont entraînées par frottements. Afin de simplifier la fabrication de la roue de dosage (24) de type petites graines, celui-ci est réalisé en deux parties symétriques par rapport à un axe vertical passant par la gorge centrale (35).

Le mécanisme de dosage (4) et le semoir (1) qui viennent d'être décrits, ne sont qu'un exemple de réalisation et d'utilisation qui ne saurait en aucun cas limiter le domaine de protection défini par les revendications suivantes.

En effet selon un autre exemple de réalisation non représenté, ledit châssis (2) est lié indirectement à un véhicule tracteur. Le châssis (2) est conçu pour être attelé à un outil de travail du sol, lequel est à son tour lié audit véhicule tracteur. Une telle combinaison d'un outil de travail du sol et d'un semoir permet de préparer ledit de semence et d'ensemencer en un seul passage du véhicule tracteur. Ainsi ledit semoir est utilisé comme un semoir intégré.

Le semoir (1) de l'invention pourrait aussi implanter des graines de différentes tailles et formes simultanément. Il suffirait d'alimenter en même temps l'entrée grosses graines (27) et l'entrée petites graines (28) du boîtier de distribution (26) et par conséquent la roue de dosage (23) de type grosses graines et la roue de dosage (24) de type petites graines sont tous deux alimentés. Cette solution suppose que le semoir soit équipé d'un moyen de stockage supplémentaire.

Il est encore possible de doter la lamelle (18) recouvrant intégralement la roue de dosage (24) de type petites graines de fines lamelles permettant, à son tour, une évacuation individuelle des graines.

Il est tout à fait possible d'utiliser une porte inférieure (16) comportant un nombre plus élevé de lamelles (18). Ainsi pour les semoirs pneumatiques, le nombre de lamelles (18) sera supérieur à quatre car la porte inférieure (16) comporte une largeur supérieure à la largeur (11) de la roue de dosage (23) de type grosses graines.

## Revendications

1. Mécanisme de dosage (4) destiné à équiper un semoir (1), ledit semoir (1) comportant entre autres une trémie d'alimentation en graines (3) et un dispositif d'implantation de graines dans le sol (6), ledit mécanisme de dosage (4) qui est disposé entre ladite trémie d'alimentation en graines (3) et ledit dispositif d'implantation de graines dans le sol (6), comporte :
- au moins un dispositif de dosage (13) permettant de doser le débit de graines à la sortie de la trémie (3), et
- au moins une porte inférieure (16) disposée sous le dispositif de dosage correspondant (13), chaque porte inférieure (16) étant pivotante et pouvant se rapprocher ou s'éloigner dudit dispositif de dosage correspondant (13), la largeur de ladite porte inférieure (16) étant sensiblement égale à la largeur dudit dispositif de dosage correspondant (13),
***caractérisé par le fait que*** ladite porte inférieure (16) comporte plusieurs lamelles (18).

2. Mécanisme de dosage selon la revendication 1, ***caractérisé par le fait que*** les lamelles (18) présentent une largeur sensiblement identique.

3. Mécanisme de dosage selon la revendication 1 ou 2, ***caractérisé par le fait que*** ladite porte inférieure (16) comporte avantageusement quatre lamelles (18).

4. Mécanisme de dosage selon l'une quelconque des revendications 1 à 3, ***caractérisé par le fait que*** ladite porte inférieure (16) est constituée d'une partie de liaison (19) et d'une partie de travail (20), ladite partie de travail (20) comportant une portion sensiblement plane (21) et une portion courbée (22).

5. Mécanisme de dosage selon l'une quelconque des revendications 1 à 4, ***caractérisé par le fait que*** lesdites lamelles (18) débutent sur ladite portion plane (21) et continuent sur l'intégralité de ladite portion courbée (22).

6. Mécanisme de dosage selon l'une quelconque des revendications 1 à 5, ***caractérisé par le fait que*** ledit dispositif de dosage (13) est formé d'une roue de dosage (23) de type grosses graines et d'une roue de dosage (24) de type petites graines.

7. Mécanisme de dosage selon la revendication 6, ***caractérisé par le fait que*** ladite roue de dosage (23) de type grosses graines présente un diamètre et une largeur (11) supérieurs à ladite roue de dosage (24) de type petites graines.

8. Mécanisme de dosage selon la revendication 6 ou 7, ***caractérisé par le fait que*** la largeur d'une lamelle (18) est sensiblement égale à la largeur (12) de ladite roue de dosage (24) de type petites graines.

9. Mécanisme de dosage selon l'une quelconque des revendications 6 à 8, ***caractérisé par le fait que*** ladite roue de dosage (23) de type grosses graines et la roue de dosage (24) de type petites graines sont séparées un flasque (25).

10. Mécanisme de dosage selon l'une quelconque des revendications 6 à 9, ***caractérisé par le fait que*** ladite roue de dosage (23) de type grosses graines est cloisonné entre deux flasques (25).

11. Mécanisme de dosage selon l'une quelconque des revendications 6 à 10, ***caractérisé par le fait que*** ladite roue de dosage (24) de type petites graines est associée à un seul flasque (25).

12. Mécanisme de dosage selon l'une quelconque des revendications 9 à 11, ***caractérisé par le fait que*** lesdits flasques (25) sont entraînés en rotation avec lesdites roues de dosage (23, 24).

13. Mécanisme de dosage selon l'une quelconque des revendications 9 à 12, ***caractérisé par le fait que*** lesdits flasques (25) présentent un diamètre supérieur au diamètre de ladite roue de dosage (23) de type grosses graines.

14. Mécanisme de dosage selon l'une quelconque des revendications 6 à 13, ***caractérisé par le fait que*** ladite roue de dosage (24) de type petites graines comporte une gorge centrale (34).

15. Mécanisme de dosage selon la revendication 14, ***caractérisé par le fait que*** ladite roue de dosage (24) de type petites graines comporte des encoches (35) sur les flancs de ladite gorge centrale (34).

16. Mécanisme de dosage selon l'une quelconque des revendications 6 à 15, ***caractérisé par le fait que*** lesdites roues de dosage (23, 24) sont alimentées par un boîtier de distribution (26) comportant plusieurs entrées de graines (27, 28).

17. Semoir agricole comportant :
- au moins un châssis (2),
- une trémie d'alimentation en graines (3),
- un mécanisme de dosage (4) entraîné par au moins un dispositif d'entraînement et comportant au moins un dispositif de dosage (13),
- un dispositif d'acheminement (5), et
- un dispositif d'implantation (6),
***caractérisé par le fait que*** ledit mécanisme de dosage (4) est tel que défini selon l'une des revendications 1 à 16.

## Patentansprüche

1. Dosiermechanismus (4), der dazu bestimmt ist, eine Sämaschine (1) auszustatten, wobei die Sämaschine (1) unter anderem einen Körnerzuführtrichter (3) und eine Vorrichtung zum Einsetzen von Körnern in den Boden (6) umfasst, wobei der Dosiermechanismus (4), der zwischen dem Körnerzuführtrichter (3) und der Vorrichtung zum Einsetzen von Körnern in den Boden (6) angeordnet ist mit:
- mindestens einer Dosiervorrichtung (13), die es ermöglicht, den Körnerdurchfluß am Ausgang des Trichters (3) zu dosieren, und
- mindestens einer unteren Tür (16), die unter der entsprechenden Dosiervorrichtung (13) angeordnet ist, wobei jede untere Tür (16) schwenkbar ist und sich der entsprechenden Dosiervorrichtung (13) annähern oder von dieser entfernen kann, wobei die Breite der unteren Tür (16) im Wesentlichen gleich der Breite der entsprechenden Dosiervorrichtung (13) ist,
versehen ist, ***dadurch gekennzeichnet,* dass** die untere Tür (16) mehrere Lamellen (18) umfasst.

2. Dosiermechanismus nach Anspruch 1, ***dadurch gekennzeichnet,* dass** die Lamellen (18) eine im Wesentlichen identische Breite aufweisen.

3. Dosiermechanismus nach Anspruch 1 oder 2, ***dadurch gekennzeichnet,* dass** die untere Tür (16) vorzugsweise vier Lamellen (18) umfasst.

4. ; Dosiermechanismus nach irgend einem der Ansprüche 1 bis 3, ***dadurch gekennzeichnet,* dass** die untere Tür (16) von einem Verbindungsteil (19) und einem Arbeitsteil (20) gebildet ist, wobei der Arbeitsteil (20) einen im Wesentlichen flachen Abschnitt (21) und einen gekrümmten Abschnitt (22) umfasst.

5. Dosiermechanismus nach irgend einem der Ansprüche 1 bis 4, ***dadurch gekennzeichnet,* dass** die Lamellen (18) auf dem flachen Abschnitt (21) beginnen und auf dem gesamten gekrümmten Abschnitt (22) weiterführen.

6. Dosiermechanismus nach irgend einem der Ansprüche 1 bis 5, ***dadurch gekennzeichnet,* dass** die Dosiervorrichtung (13) von einem Dosierrad (23) für grobe Körner und von einem Dosierrad (24) für kleine Körner gebildet ist.

7. Dosiermechanismus nach Anspruch 6, ***dadurch gekennzeichnet,* dass** das Dosierrad (23) für grobe Körner einen Durchmesser und eine Breite (11) aufweist, die größer als das Dosierrad (24) für kleine Körner sind.

8. Dosiermechanismus nach Anspruch 6 oder 7, ***dadurch gekennzeichnet,* dass** die Breite einer Lamelle (18) im Wesentlichen gleich der Breite (12) des Dosierrades (24) für kleine Körner ist.

9. Dosiermechanismus nach irgend einem der Ansprüche 6 bis 8, ***dadurch gekennzeichnet,* dass** das Dosierrad (23) für grobe Körner und das Dosierrad (24) für kleine Körner durch einen Flansch (25) getrennt sind.

10. Dosiermechanismus nach irgend einem der Ansprüche 6 bis 9, ***dadurch gekennzeichnet,* dass** das Dosierrad (23) für grobe Körner zwischen zwei Flanschen (25) eingeschlossen ist.

11. Dosiermechanismus nach irgend einem der Ansprüche 6 bis 10, ***dadurch gekennzeichnet,* dass** das Dosierrad (24) für kleine Körner mit nur einem Flansch (25) verbunden ist.

12. Dosiermechanismus nach irgend einem der Ansprüche 9 bis 11, ***dadurch gekennzeichnet,* dass** die Flansche (25) in Drehung mit den Dosierrädern (23, 24) angetrieben werden.

13. Dosiermechanismus nach irgend einem der Ansprüche 9 bis 12, ***dadurch gekennzeichnet,* dass** die Flansche (25) einen größeren Durchmesser als der Durchmesser des Dosierrades (23) für grobe Körner aufweisen.

14. Dosiermechanismus nach irgend einem der Ansprüche 6 bis 13, ***dadurch gekennzeichnet,* dass** das Dosierrad (24) für kleine Körner eine mittlere Rille (34) umfasst.

15. Dosiermechanismus nach Anspruch 14, ***dadurch gekennzeichnet,* dass** das Dosierrad (24) für kleine Körner Kerben (35) auf den Seitenflächen der mittleren Rille (34) umfasst.

16. Dosiermechanismus nach irgend einem der Ansprüche 6 bis 15, ***dadurch gekennzeichnet,* dass** die Dosierräder (23, 24) von einem Verteilungsgehäuse (26) gespeist werden, das mehrere Körnereingänge (27, 28) umfasst.

17. Landwirtschaftliche Sämaschine, die
- mindestens ein Gestell (2),
- einen Körnerzuführtrichter (3),
- einen Dosiermechanismus (4), der von mindestens einer Antriebsvorrichtung angetrieben wird und mindestens eine Dosiervorrichtung (13) umfasst,
- eine Fördervorrichtung (5), und
- eine Einsetzvorrichtung (6),
umfasst, ***dadurch gekennzeichnet,* dass** der Dosiermechanismus (4) derart ist, wie nach einem der Ansprüche 1 bis 16 definiert.

## Claims

1. Metering mechanism (4) intended to equip a seed drill (1), the said seed drill (1) comprising, among other things a seed supply hopper (3) and a device (6) for planting seeds in the ground, the said metering mechanism (4) which is arranged between the said seed supply hopper (3) and the said device (6) for planting seeds in the ground, comprises:
- at least one metering device (13) allowing the flow rate of seeds leaving the hopper (3) to be metered, and
- at least one lower door (16) arranged under the corresponding metering device (13), each lower door (16) being able to pivot and being able to move closer to or further away from the said corresponding metering device (13), the width of the said lower door (16) being substantially equal to the width of the said corresponding metering device (13),
***characterized in* that** the said lower door (16) comprises several strips (18).

2. Metering mechanism according to Claim 1, ***characterized in* that** the strips (18) have substantially the same width.

3. Metering mechanism according to Claim 1 or 2, ***characterized in* that** the said lower door (16) advantageously comprises four strips (18).

4. Metering mechanism according to any one of Claims 1 to 3, ***characterized in* that** the said lower door (16) is made up of a connecting part (19) and of a working part (20), the said working part (20) comprising a substantially flat portion (21) and a curved portion (22).

5. Metering mechanism according to any one of Claims 1 to 4, ***characterized in* that** the said strips (18) start on the said flat portion (21) and continue over the whole of the said curved portion (22).

6. Metering mechanism according to any one of Claims 1 to 5, ***characterized in* that** the said metering device (13) is formed of a metering wheel (23) of the large seeds type and of a metering wheel (24) of the small seeds type.

7. Metering mechanism according to Claim 6, ***characterized in* that** the said metering wheel (23) of the large seeds type has a diameter and a width (11) that are greater than the said metering wheel (24) of the small seeds type.

8. Metering mechanism according to Claim 6 or 7, ***characterized in* that** the width of a strip (18) is substantially equal to the width (12) of the said metering wheel (24) of the small seeds type.

9. Metering mechanism according to any one of Claims 6 to 8, ***characterized in* that** the said metering wheel (23) of the large seeds type and the metering wheel (24) of the small seeds type are separated by a flange (25).

10. Metering mechanism according to any one of Claims 6 to 9, ***characterized in* that** the said metering wheel (23) of the large seeds type is enclosed between two flanges (25).

11. Metering mechanism according to any one of Claims 6 to 10, ***characterized in* that** the said metering wheel (24) of the small seeds type is associated with a single flange (25).

12. Metering mechanism according to any one of Claims 9 to 11, ***characterized in* that** the said flanges (25) are rotationally driven with the said metering wheels (23, 24).

13. Metering mechanism according to any one of Claims 9 to 12, ***characterized in* that** the said flanges (25) have a diameter greater than the diameter of the said metering wheel (23) of the large seeds type.

14. Metering mechanism according to any one of Claims 6 to 13, ***characterized in* that** the said metering wheel (24) of the small seeds type comprises a central groove (34).

15. Metering mechanism according to Claim 14, ***characterized in* that** the said metering wheel (24) of the small seeds type comprises notches (35) on the flanks of the said central groove (34).

16. Metering mechanism according to any one of Claims 6 to 15, ***characterized in* that** the said metering wheels (23, 24) are fed by a distribution box (26) comprising several seeds inlets (27, 28).

17. Agricultural seed drill comprising:
- at least one chassis (2),
- a seed supply hopper (3),
- a metering mechanism (4) driven by at least one drive device and comprising at least one metering device (13),
- a conveying device (5), and
- a planting device (6),
***characterized in* that** the said metering mechanism (4) is as defined in one of Claims 1 to 16.
